# FASCICULE DE BREVET EUROPEEN

(11) **EP 0 650 758 B1**
(45) Date de publication et mention de la délivrance du brevet: **14.01.1998**
(21) Numéro de dépôt: 94460038.6
(22) Date de dépôt: 31.10.1994
(51) Int. Cl.: B01D 53/85

(54) **Procédé d'épuration et de biodésodorisation d'un effluent gazeux et installation pour la mise en oeuvre d'un tel procédé**
Verfahren zur Reinigung und Biodesodorierung eines Abgases und Vorrichtung zur Ausführung dieses Verfahrens
Process for cleaning and biodeodorisation of an exhaust gas and device for executing such a process

(30) Priorité: 02.11.1993 FR 9313226
(43) Date de publication de la demande: 03.05.1995
(73) Titulaire: OTV Omnium de Traitements et de Valorisation S.A., 94417 St Maurice Cédex (FR)
(72) Inventeur: Bonnin, Christophe, F-94430 Chennevieres Sur Marne (FR); Martin, Guy, F-35510 Cesson Sevigne (FR); Coriton, Gabriel, F-94500 Champigny Sur Marne (FR)
(74) Mandataire: Vidon, Patrice

(56) Documents cités:
- EP-A- 0 094 573
- EP-A- 0 218 958
- EP-A- 0 224 889
- FR-A- 2 591 122

## Description

L'invention concerne le domaine de l'épuration et de la désodorisation des effluents gazeux.

Plus précisément, l'invention se rapporte à un procédé permettant d'abattre significativement la teneur de ces effluents en polluants à l'origine de nuisances olfactives et notamment la concentration en composées soufrés et la concentration en composés azotés.

Les stations d'épuration sont à l'origine de nombreuses nuisances olfactives dont les principales sont l'ammoniac, les composés azotés organiques (tels que la méthylamine, l'indole, le scatole...), les composés soufrés (sulfure d'hydrogène, mercaptans, disulfures) ainsi que divers aldéhydes et cétones.

Les espèces soufrées et azotées volatiles responsables des odeurs ont de surcroît des seuils de perception relativement faibles, voire très faibles. Il en résulte une gêne importante pour les riverains et les passants.

On connaît dans l'état de l'art différentes techniques d'épuration et de désodorisation des effluents gazeux.

L'une de ces techniques consiste à faire passer les effluents gazeux dans une succession de tours de lavage renfermant chacune un liquide chargé de piéger un type de pollution organique. Les installations mettant en oeuvre une telle technique comprennent au moins trois tours : une chargée de piéger la pollution azotée soluble à pH acide, une autre chargée de piéger la pollution soufrée soluble à pH faiblement basique et encore une autre chargée de piéger la pollution soufrée soluble à pH fortement basique.

Alors que de telles installations permettent des vitesses élevées de passage des effluents gazeux dans les tours, elles présentent l'inconvénient majeur de prendre beaucoup de place. Il est donc parfois impossible de recourir à de telles installations.

D'autres techniques consistent à piéger les molécules odorantes dans un liquide ou au sein d'un matériau solide et à autoriser la dégradation de ces molécules par une biomasse. On connaît ainsi dans l'état de la technique des "bioscrubbers" tels que celui décrit dans le document EP-A-0 218 958. Dans de telles installations, le gaz traité est d'abord mis en contact avec une biomasse en phase aqueuse de façon à transférer une partie des polluants de la phase gaz sur la biomasse. Cette biomasse est ensuite acheminée vers un réacteur dans lequel les polluants sont dégradés.

Toutefois, de telles installations ne permettent l'élimination que des composants solubles au pH de la phase aqueuse utilisée et ne permettent pas l'utilisation des polluants non solubles dans l'eau au pH considéré.

On connaît également les biolaveurs, dans lesquels la pollution est piégée dans une eau de lavage puis dégradée dans un deuxième réacteur par une biomasse appropriée et les biofiltres dans lesquels la pollution est piégée par un matériau sur lequel elle est adsorbée et/ou absorbée de façon à permettre sa dégradation ultérieure par des bactéries.

C'est plus précisément à la technique de biodésodorisation sur biofiltre que se rapporte l'invention.

On connaît ainsi dans l'état de la technique un procédé pour la désodorisation et l'épuration de gaz contenant des polluants biodégradables consistant à faire passer le gaz traité à travers un support constitué de couches de tourbe en présence de microorganismes et à humidifier lesdites couches avec des solutions aqueuses apportant des nutriments de complément. Cette technique est décrite dans le document FR-A-2 591 122. La biomasse utilisée dans une telle technique est constituée essentiellement par des bactéries hétérotrophes utilisant, en tant que source de carbone et source d'azote, la matière organique présente dans la tourbe et dans une solution d'arrosage nutritive qui contient du carbone organique.

D'autres procédés utilisant l'adsorption sur des matériaux tels que le charbon actif sont connus. Cependant, la mise en oeuvre de tels procédés sur des débits importants nécessite la réalisation d'installations couteuses.

Bien que permettant l'obtention de bons résultats de désodorisation, de telles techniques présentent néanmoins un certain nombre d'inconvénients.

En premier lieu, elles n'autorisent pas un traitement garantissant l'obtention des seuils de nuisance lorsque les effluents présentent des charges polluantes élevées. Ainsi, les performances de tels biofiltres chutent lorsque la teneur en sulfure d'hydrogène excède 15 à 20 milligrammes par litre.

En second lieu, une telle technique présentent l'inconvénient de ne pas permettre de vitesses de passage très élevées, ce qui nécessite de configurer les filtres de façon à ce qu'ils aient une surface de filtration importante. Pratiquement, les vitesses de traitement pouvant être atteintes avec de telles installations n'excèdent pas 100 mètres par heures.

Enfin, les biofiltres à couches de tourbe montrent aussi l'inconvénient de réagir lentement aux brusques variations de charge, ce qui limite leur domaine d'emploi.

On connaît aussi des biofiltres mettant en oeuvre une biomasse hétérotrophe sur support inerte tels que ceux décrits dans EP-A-94 573 ou EP-A-224 889.

Ces biofiltres présentent l'inconvénient de ne pouvoir éliminer qu'un seul type de pollution à la fois (par exemple H₂S) et de ne pouvoir travailler qu'avec des vitesses de traitement faibles (inférieures à 100 mètres par heure).

L'objectif de la présente invention est de fournir un procédé de biodésodorisation ne présentant pas les inconvénients des procédés de l'état de la technique.

En particulier, l'un des objectifs de la présente invention est de décrire un procédé permettant le traitement d'effluents gazeux pouvant être très chargés en polluants.

Un autre objectif de la présente invention est de fournir un tel procédé permettant de répondre efficacement à de brusques et fréquentes variations de charge de la pollution contenue dans les effluents sans provoquer de diminution importante des taux d'abattement de cette pollution.

Un autre objectif de l'invention est de fournir une installation pour la mise en oeuvre d'un tel procédé présentant des dimensions bien inférieures à celles des installations de l'état de la technique incluant des biofiltres à couches de tourbes.

Ces différents objectifs, ainsi que d'autres qui apparaîtront par la suite, sont atteints grâce à l'invention qui concerne un procédé d'épuration et de biodésodorisation d'un effluent gazeux chargé en matières polluantes organiques, en H₂S et en NH₃, caractérisé en ce qu'il comprend les étapes consistant à :
- faire passer ledit effluent gazeux à travers un lit de matériau granulaire inorganique inerte servant de support à une biomasse constituée de bactéries majoritairement autotrophes destinées à dégrader lesdites matières polluantes, à une vitesse supérieure ou égale à 400 m/h,
- arroser ledit lit avec un liquide d'arrosage,
- récupérer l'effluent gazeux épuré et biodésodorisé à la sortie dudit lit,
les éléments nutritifs nécessaires à la biomasse étant apportés en totalité par ledit liquide d'arrosage et/ou par ledit effluent gazeux, l'ensemble formé par ledit lit de matériau granulaire inorganique inerte et ladite biomasse majoritairement autotrophe permettant de dégrader concommitamment lesdites matières polluantes par voie physico-chimique et par voie biologique.

Ainsi, la biomasse utilisée dans le cadre de la présente invention est une biomasse autotrophe, c'est-à-dire capable d'utiliser le carbone et l'azote qui lui sont nécessaires sous forme minérale.

Le support de la biomasse utilisé dans le cadre de la présente invention présente la particularité d'être inorganique et inerte par rapport à la biomasse, en ce sens qu'il ne peut être consommé sous quelque forme que ce soit par celle-ci.

De plus, l'utilisation de vitesses supérieures ou égales à 400m/h constitue un avantage considérable par rapport aux procédés de l'état de la technique qui ne permettent pas l'emploi de vitesses supérieures à 100 m/h.

Selon une variante de l'invention, lesdits éléments nutritifs nécessaire à ladite biomasse autotrophe sont apportés en totalité par le liquide d'arrosage du lit granulaire.

Ce liquide d'arrosage a alors deux rôles :
- un premier rôle consistant à humidifier le lit de matériau granulaire inerte servant de support à la biomasse;
- un second rôle consistant à apporter les éléments nutritifs nécessaires à cette biomasse.

Selon une autre variante de l'invention, ces éléments nutritifs sont apportés par l'effluent gazeux traité lui-même. Le liquide d'arrosage n'a plus alors a remplir que sont rôle essentiel d'humidification du lit de matériau inorganique inerte. Celui-ci doit néanmoins contenir les phosphates nécessaires au développement de la biomasse.

Préférentiellement, le procédé selon l'invention comprend une étape complémentaire de recirculation d'au moins une partie du liquide d'arrosage à sa sortie dudit lit. Une telle recirculation présente l'avantage de permettre l'économie de la biomasse et la concentration des éléments nutritifs.

Selon une autre variante préférentielle de l'invention, ladite étape de recirculation s'accompagne d'une étape de régulation du pH dudit liquide d'arrosage à pH essentiellement neutre (6 à 8) ou alcalin (8 à 14). En effet, la dégradation des composés soufrés au sein du matériau granulaire inorganique se traduit par la libération d'ions H+ qui entraînent l'acidification progressive du milieu. Il est donc souhaitable de neutraliser ou d'alcaliniser celui-ci de façon telle que l'acidité produite ne nuise pas au développement de la biomasse.

Préférentiellement, ladite étape de régulation du pH est effectuée par ajout de potasse dans ledit liquide d'arrosage . La potasse présente en effet l'avantage, par rapport à la soude, de ne pas libérer d'ions susceptibles de gêner la croissance des bactéries.

On notera toutefois que l'on pourra aussi envisager, dans d'autres modes de réalisation de l'invention dans lesquels au moins une partie du liquide d'arrosage est recirculé, de réguler le pH du liquide d'arrosage à un pH acide (inférieur à 6). Dans un tel mode de réalisation de l'invention, les bactéries autotrophes constituant la biomasse fixée sur le lit de matériau granulaire puiseront alors l'essentiel du carbone nécessaire à leur développement dans le C02 gazeux provenant du dégazage des carbonates présents dans ledit liquide d'arrosage.

On notera également que l'on pourra aussi travailler en évacuation directe du liquide d'arrosage à sa sortie du lit granulaire, sans recirculation et en absence de régulation du pH de ce liquide.

Selon une variante de l'invention, ladite étape d'arrosage dudit lit de matériau granulaire inorganique est menée de façon continue.

Selon une autre variante particulièrement intéressante de l'invention, ladite étape d'arrosage dudit lit de matériau granulaire inorganique est menée de façon discontinue afin d'alterner des périodes d'arrosage dudit lit et des périodes de non-arrosage dudit lit.

Préférentiellement, lesdites périodes de non-arrosage dudit lit n'excèdent pas une durée de 24 heures.

Avantageusement, ladite étape consistant à faire passer ledit effluent gazeux à travers ledit matériau granulaire inorganique et ladite étape consistant à arroser ledit lit avec un liquide d'arrosage sont effectuées de façon telle que ledit effluent gazeux connaisse un mouvement ascendant dans ledit lit de matériau granulaire inorganique et que ledit liquide d'arrosage connaisse un mouvement descendant dans ledit lit de matériau granulaire inorganique, à contre-courant dudit effluent gazeux.

Lorsque l'on travaille à pH neutre où légèrement basique, la dégradation des composés soufrés autorise l'établissement d'un gradient acide à l'intérieur du lit de matériau inorganique grâce à la formation d'ions H₃O+. Cette acidité permet d'éliminer par voie physico-chimique les composés azotés organiques transitant dans le lit de matériau granulaire (essentiellement l'ammoniac) et de les transformer en ions ammoniums après transfert de l'ammoniac en phase liquide. Cette transformation physico-chimique est d'autant plus importante que le milieu est acide. Elle est donc plus importante dans la partie inférieure du biofiltre.

L'invention permet donc de réaliser dans le même filtre, à la fois la biodégradation des composés soufrés et l'élimination physico-chimique des composés azotés organiques.

A ce sujet, on notera que les ions ammoniums restant dans le liquide d'arrosage à sa sortie du biofiltre pourront avantageusement être utilisés comme nutriments, lorsque le procédé selon l'invention sera mis en oeuvre en mode recirculé. Ainsi, l'apport de nutriments dans le liquide d'arrosage pourra être diminué.

Lorsque, selon l'invention, les éléments nutritifs nécessaires à la biomasse sont apportés par l'effluent gazeux lui-même, celui-ci comprend préférentiellement plus de 1 mg/m³ d'ammoniac et plus de 1% de C0₂ .Ces quantités d'ammoniac et de CO₂, peuvent être présentes soit naturellement dans l'effluent gazeux, soit être apportés en dopant celui-ci avant son entrée dans ledit lit de matériau granulaire inorganique inerte.

Lorsque lesdits éléments nutritifs sont apportés par le liquide d'arrosage,ladite étape d'arrosage dudit lit de matériau granulaire inorganique est préférentiellement effectuée avec un liquide présentant une teneur minimale en azote ammoniacal supérieure à 1mg/l.

Egalement préférentiellement, ce liquide présente une teneur minimale en carbonates de 10 mg/l.

Egalement préférentiellement, ce liquide présente aussi une teneur minimale en phosphates supérieure à 0,01 mg/l.

Ces teneurs minimales pourront être soit naturellement présentes dans le liquide utilisé en tant que liquide d'arrosage, soit ajustés par apport des nutriments voulus à ce liquide.

Avantageusement, ledit matériau granulaire inorganique inerte est un matériau minéral pouvant notamment être choisi dans le groupe constitué par les argiles, les schistes argileux, les alumines, les alumines activées, les zéolites, les sables, les graviers, l'anthracite, le charbon actif.

Egalement avantageusement, ledit matériau granulaire inorganique présentant une granulométrie supérieure à 1 mm.

Selon une variante préférentielle de l'invention, ladite biomasse comprend des bactéries autotrophes permettant d'oxyder les composés soufrés choisies dans le groupe constitué par *Thiobacillus thiooxydans, Thiobacillus thioparus et Thiobacillus intermedius*.

Selon une variante de l'invention, le procédé comprend une étape supplémentaire consistant à faire passer ledit effluent gazeux à sa sortie du lit de matériau granulaire inorganique supportant ladite biomasse sur au moins une unité de filtration d'affinage, accolée audit lit ou séparée de celui-ci, selon un courant ascendant ou selon un courant descendant.

Bien que l'on pourra envisager tout autre type d'unité de filtration d'affinage, celle-ci sera préférentiellement constituée par au moins un lit de charbon actif en grains.

Selon une variante de l'invention, ladite étape consistant à arroser ledit lit de matériau granulaire inorganique est effectuée à l'aide d'une eau choisie dans le groupe constitué par les eaux de forage, naturelles ou complémentées, et les eaux de sortie des stations d'épuration des eaux usées. De telles eaux présentent en effet généralement des teneurs en nutriments suffisantes pour permettre le développement de la biomasse autotrophe. En cas de besoin, ces teneurs pourront être ajustées de façon à répondre aux valeurs minimales indiquées ci-dessus.

L'invention concerne également une installation pour la mise en oeuvre d'un tel procédé caractérisée en ce qu'elle comprend :
- une cuve présentant une chambre supérieure et une chambre inférieure séparées par une grille,
- des moyens d'amenée d'un effluent gazeux prévus au niveau de ladite chambre inférieure,
- un matériau granulaire inorganique inerte ensemencé avec une biomasse autotrophe remplissant au moins une partie de ladite chambre supérieure, et,
- des moyens d'arrosage dudit matériau granulaire présent dans ladite chambre supérieure à l'aide d'un liquide d'arrosage.

Préférentiellement, ladite installation comprend des moyens de recirculation dudit liquide d'arrosage.

Egalement préférentiellement, ladite installation comprend des moyens de régulation du pH du liquide d'arrosage.

L'invention, ainsi que les différents avantages qu'elle présente, seront plus facilement compris grâce à la description qui va suivre de deux exemples de réalisation en référence aux dessins dans lesquels :
- la figure 1 représente schématiquement un premier mode de réalisation d'une installation pour la mise en oeuvre du procédé selon l'invention sans recirculation du liquide d'arrosage,
- la figure 2 représente schématiquement un second mode de réalisation d'une installation pour la mise en oeuvre du procédé selon l'invention avec recirculation du liquide d'arrosage,
- la figure 3 et la figure 4 représentent un troisième et un quatrième mode de réalisation d'une installation pour la mise en oeuvre du procédé selon l'invention incluant une unité de charbon actif en grains.

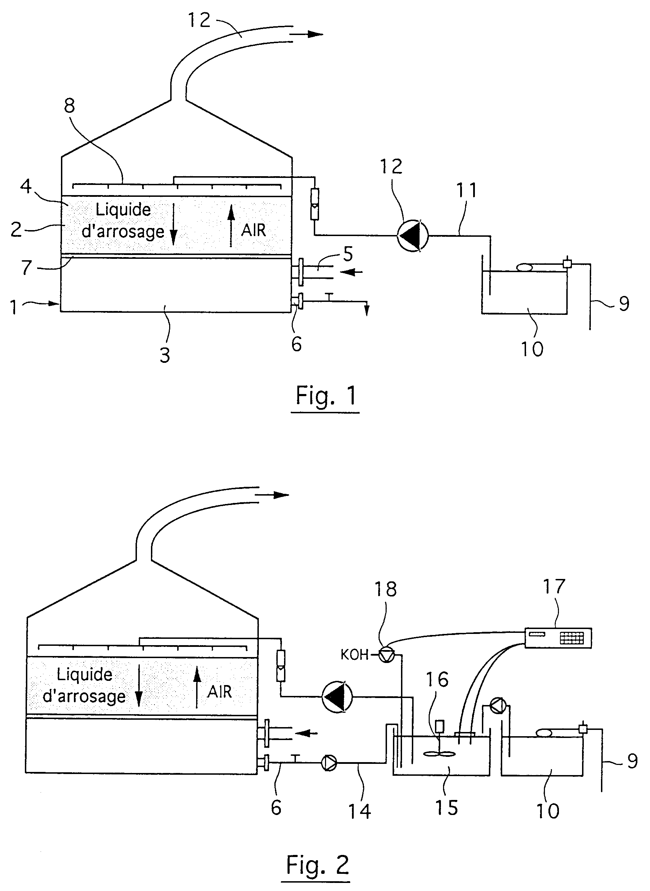

En référence à la figure 1, l'installation pour l'épuration et la désodorisation des effluents gazeux comprend une cuve en polyéthylène 1 délimitant essentiellement deux chambres 2 et 3.

La chambre supérieure 2 est destinée à recevoir un lit de matériau inorganique 4 constitué par un schiste argileux granulaire présentant une granulométrie comprise entre 3 et 6 mm. Les dimensions de la cuve 1 permettent d'accueillir un lit de schiste argileux présentant une épaisseur de 1 mètre et une surface filtrante de 5m².

La chambre inférieure 3 est quant à elle destiné à accueillir l'air vicié provenant d'une station d'épuration acheminé par une canalisation 5 ainsi qu'à le distribuer sous tout le filtre. Cette chambre sert également à récupérer l'eau d'arrosage après que celui-ci ait traversé le lit de matériau inorganique et à l'évacuer par une évacuation 6.

Les deux chambres 2 et 3 sont séparées par une grille 7 de maille 2 cm² servant de support au matériau inorganique. Cette grille en matière plastique rigide repose sur des pieds logés dans le pied de la cuve et est elle-même recouverte d'une toile synthétique dont la maille est de dix fois inférieure à celle de la grille.

L'eau d'arrosage est amenée par une rampe d'aspersion 8 munie d'une série de buses régulièrement réparties au-dessus du filtre dont l'angle d'aspersion varie de 90° à 120° et est constituée par de l'eau de forage. Cette eau est amenée par une canalisation 9 jusqu'à un bac de flottation 10 puis pompée dans une autre canalisation 11 par une pompe 12 directement vers la rampe d'aspersion 8.

Comme on peut le voir sur la figure 1, l'arrosage du matériau filtrant se fait, sans recirculation, à contre-courant du passage de l'effluent gazeux à travers le biofiltre, l'air traité étant évacué dans la partie supérieure de la cuve 1 par une canalisation 12.

Au cours de l'utilisation de l'installation représentée, le débit d'air vicié arrivant par la canalisation 5 a été fixé à 2500 m³/h soit une charge superficielle de 500m³/m/h et une vitesse de l'effluent de 0,13m/s (468/h) pour un temps de séjour de l'air en cours de traitement à l'intérieur du biofiltre de 7,2 s.

Le débit d'eau d'arrosage mis en oeuvre est de 600 l/h. L'arrosage est effectué pendant deux minutes toutes les trente minutes.

L'air vicié traité par l'installation est chargé essentiellement en ammoniac et en composés soufrés (principalement sous forme de sulfures) et présente en moyenne les charges suivantes de polluants, dépassant les seuils de nuisance sauf en ce qui concerne l'azote organique :
- H₂S: 40mg/m³
- CH₃SH: 10mg/m³
- Sulfures totaux: 50mg/m³
- NH₃: 1,5mg/m³
- Azote organique: 0,05mg/m³

L'eau de forage utilisée en tant qu'eau d'arrosage présente quant à elle les caractéristiques principales suivantes :
- pH = 7 à 7,5: NO₃₋= 8 à 13 mg/l
- TAC= 30°F: NO₂ ₋= 0,5 mg/l
- NTK = 4 mg N/l: P0₄₋ = 0,05 à 0,1 mg/l
- NH₄+ = 2,5 mg/l: SO₄₋₋= 150 mg/l
- Norg = 1,5 mg/l: Sulfures < 0,01 mg/l

Après un phase d'adsorption de quinze jours, durant laquelle seule de l'air vicié a transité dans le filtre en absence de biomasse et en absence d'arrosage, le biofiltre a été ensemencé avec une biomasse constituée principalement de *Thiobacillus thiooxydans, Thiobacillus thioparus et Thiobacillus intermédius.*

L'installation a ensuite été utilisée en mettant en oeuvre un arrosage du lit de schiste argileux inorganique selon la fréquence précisée ci-dessus, soit deux minutes toutes les demi-heures ménageant des périodes d'assèchement courtes de seulement 28 minutes.

Afin d'atteindre une teneur en phosphates suffisamment élevée pour permettre un bon développement de la biomasse, l'eau d'arrosage a été dopée en phosphates sous forme Na₃PO₄.

Huit prélèvements journaliers ont été effectués pour mesurer l'efficacité du filtre. Ces mesures ont consisté à mesurer la concentration de l'effluent gazeux à l'entrée du filtre et à sa sortie, d'une part en ammoniac et d'autre part en composés soufrés puis à calculer le rendement d'abattement atteint par le filtre. Les résultats sont donnés dans les tableaux I, II et III suivants, respectivement pour l'hydrogène sulfuré, le méthylmercaptan et l'ammoniac.

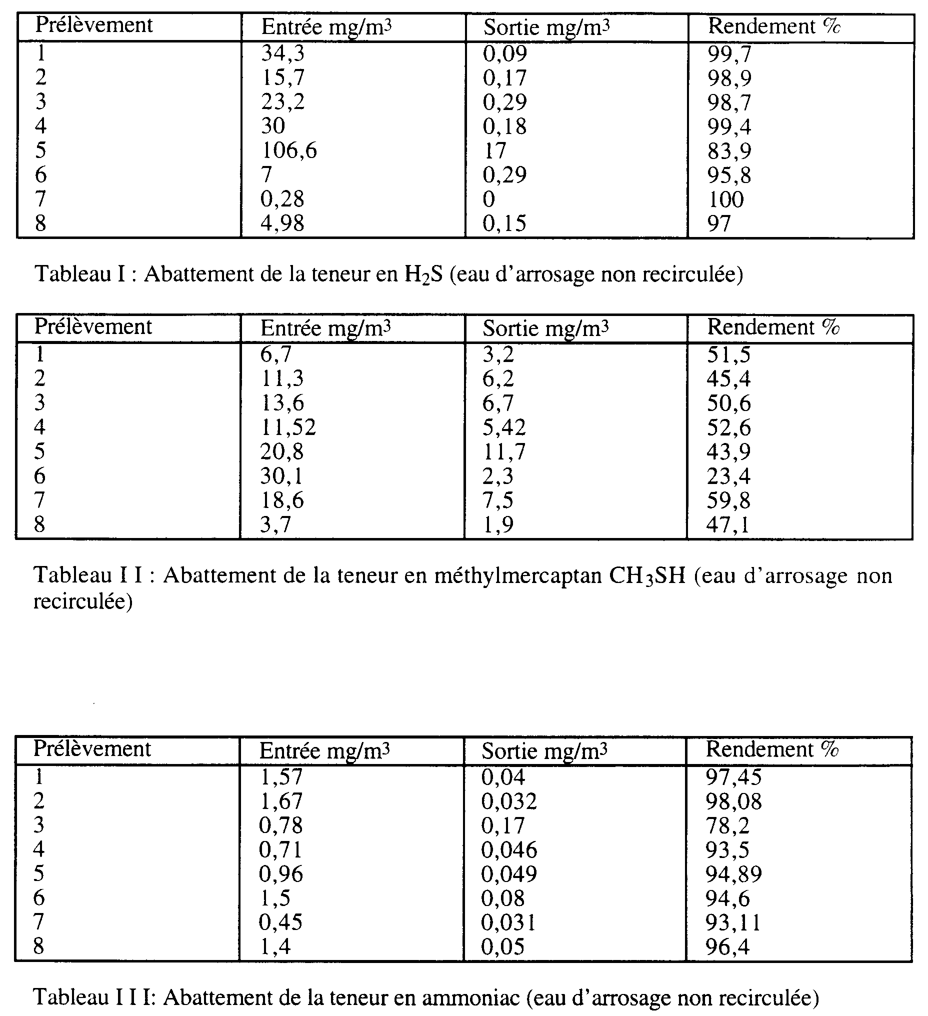

Ces résultats traduisent le bon abattement des composes soufrés malgré les brutales et importantes variations de charges, et en particulier l'excellent abattement d'H₂S, et également le très bon abattement de l'ammoniac.

En référence à la figure 2 un second mode de réalisation de l'installation à été mis en oeuvre. Cette installation est identique à l'installation représentée à la figure 1 sauf en ce qu'elle inclut des moyens de recirculation de l'eau d'arrosage . Ces moyens sont constitués par une canalisation 14 branchée sur l'évacuation 6 du liquide d'arrosage à la sortie de la cuve 1 et pourvue d'une pompe péristaltique permettant le réacheminement de cette eau vers une cuve de recirculation 15 équipée d'un agitateur 16.

La cuve 15 est par ailleurs pourvue de moyens de contrôle 17 du pH de l'eau présente dans la cuve 15 commandant des moyens d'ajout de potasse 18 dans celle-ci et le pH a été régulé à 7.

Lors de l'utilisation de l'installation représentée à la figure 2, la perte d'eau par évaporation et nébulisation dans la cuve 15 a été compensée par de l'eau de forage introduite en continu.

Par ailleurs, les séquences d'arrosage ont été les mêmes que ci-dessus, à savoir 2 mn d'arrosage toutes les 30 minutes de fonctionnement.

Cinq prélèvements journaliers ont été effectués pour mesurer l'efficacité du filtre. Ces mesures ont consisté à mesurer la concentration de l'effluent gazeux à l'entrée du filtre et à sa sortie, d'une part en ammoniac et d'autre part en composés soufrés, puis à calculer le rendement d'abattement atteint par le filtre. Les résultats sont donnés dans les tableaux IV, V et VI suivants respectivement pour l'hydrogène sulfuré, le méthyl mercaptan et l'ammoniac.

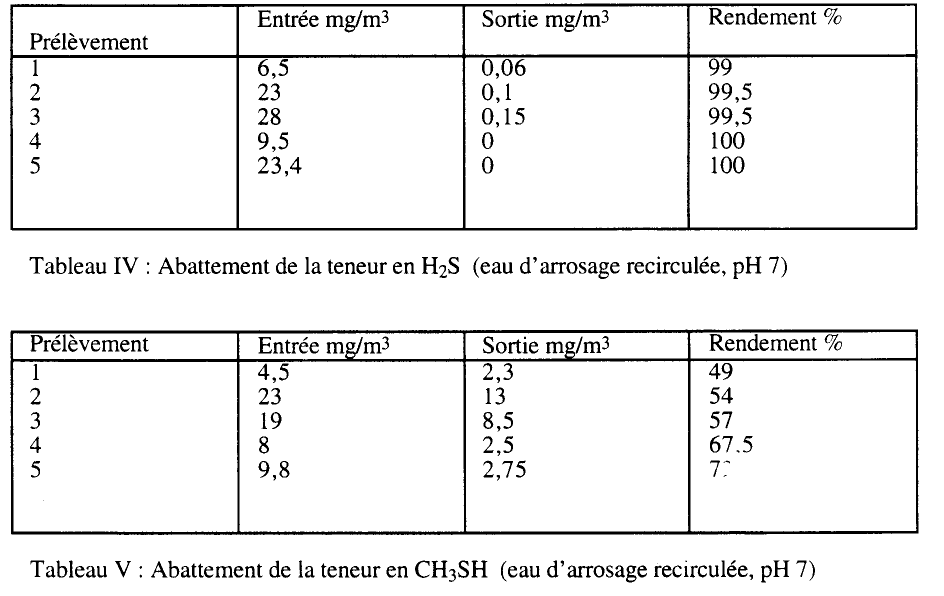

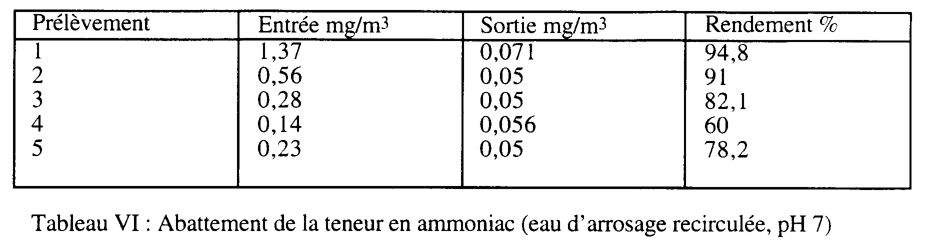

Ces résultats sont traduisent le très bon abattement composés soufrés, et plus particulièrement de H₂S et l'excellent abattement de l'ammoniac.

La mise en oeuvre d'une régulation du pH par la potasse a permis d'obtenir de bons rendements d'élimination des composés soufrés volatils et en particulier de H₂S.

D'autres essais ont également été menée avec l'installation représentée à la figure 2 en régulant le pH du liquide d'arrosage à 3, les bactéries puisant alors le carbone dont elles ont besoin dans le CO₂ gazeux provenant du dégazage des carbonates présents dans le liquide d'arrosage.

Les résultats d'abattement du sulfure d'hydrogène sont donnés dans le tableau VII.

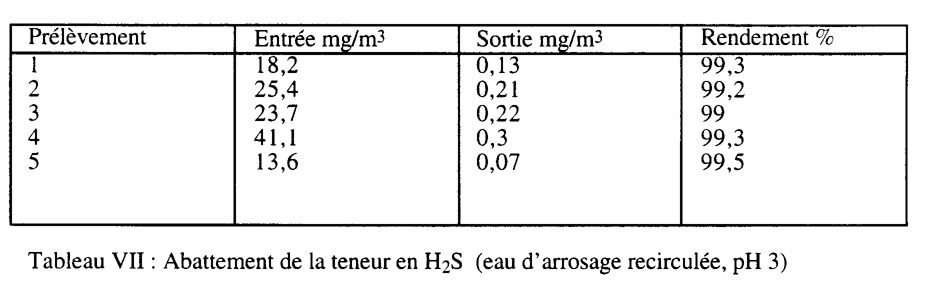

Ainsi, on peut constater un excellent abattement de la pollution soufrée également lorsque le procédé est mis en oeuvre à pH acide.

Des tests on également été menés après un période de non-arrosage supérieure à 24 heures. Les résultats sur l'abbatement en hydrogène sulfuré sont montrés au tableau VIII et indiquent un chute importante de cet abattement.

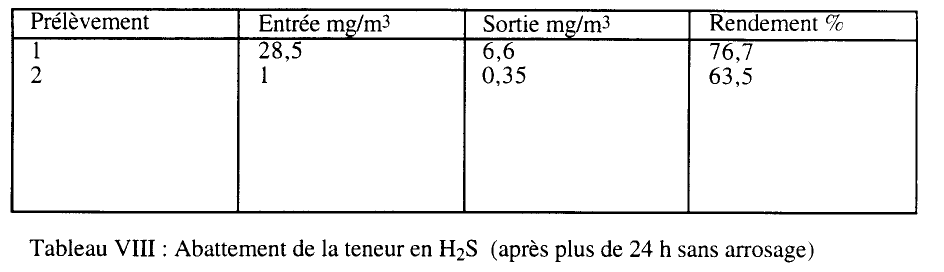

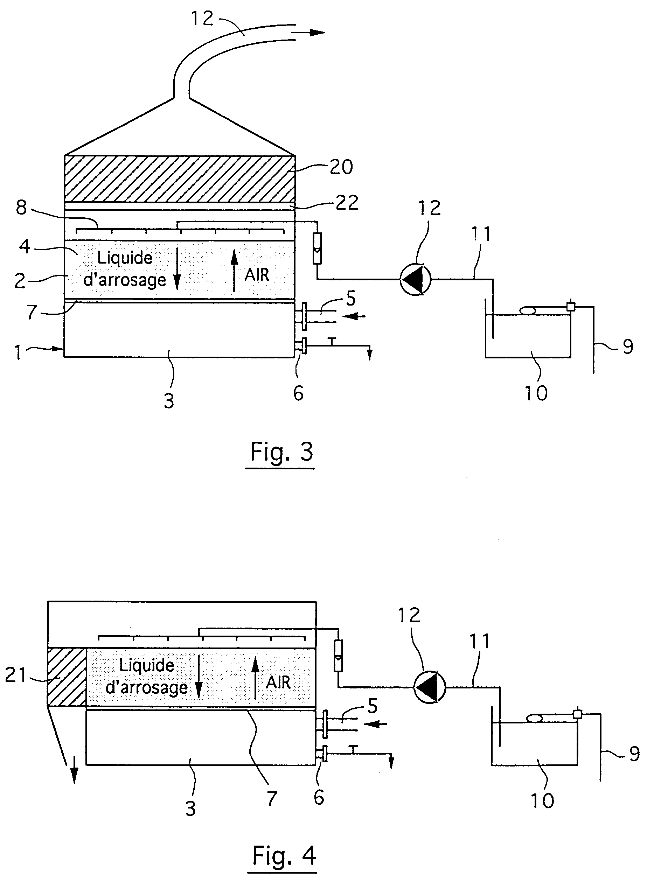

Les figures 3 et 4 représentent deux autres modes de réalisation d'une installation se lon la présente invention, incluant une couche de charbon actif servant à affiner la filtration l'effluent gazeux après son passage dans le biofiltre,dans laquelle l'effluent est présent pendant 0,2 à 10 secondes.

Dans le cadre de l'installation représentée à la figure 3, cette couche est disposée dans la cuve 1 au dessus de la rampe d'arrosage et supportée par un plancher horizontal 22, l'effluent suivant alors un courant ascendant dans le biofiltre puis dans la couche de charbon actif 20.

Dans le cadre de l'installation représentée à la figure 4, cette couche est disposée autour de la cuve 1, l'effluent suivant alors un courant ascendant dans le biofiltre et un courant descendant dans la couche de charbon actif 21. Cette couche pourra faire tout le tour de la cuve 1.

On notera que dans d'autre modes de réalisation, il pourra également être envisagé de prévoir une unité d'affinage à couche de charbon actif sous une forme totalement indépendante et communiquant avec l'évacuation 12 des effluents à leur sortie du biolfiltre. Dans ce cas, l'air à traiter pourra être envoyer dans le filtre à charbon soit par refoulement direct, soit par aspiration et refoulement par un organe intercalé entre le biofiltre et l'unité de charbon actif en grain ou par un organe d'aspiration placé en aval du filtre à charbon.

La couche de charbon actif pourra aussi être disposée directement sur la couche de matériau granulaire inorganique, la rampe d'arrosage étant alors prévu au-dessus de la couche de charbon actif.

L'aspiration de l'effluent gazeux pourra se faire en prévoyant un ventilateur en amont du lit de tourbe éventuellement en complément avec un ventilateur.

Les exemples de réalisation de l'invention ici décrits n'ont pas pour objet de réduire la portée de l'invention. Il pourra donc être envisagé d'y apporter des modifications sans sortir du cadre de l'invention. En particulier, le lit de matériau inorganique inerte servant de support à la biomasse autotrophe pourra être constitué d'autres matériaux que le schiste argileux et les débits d'effluents à épurer pourront être différents de celui indiqué sans sortir du cadre de l'invention défini par les revendications.

## Revendications

1. Procédé d'épuration et de biodésodorisation d'un effluent gazeux chargé en matières polluantes organiques, en H₂S et en NH₃, caractérisé en ce qu'il comprend les étapes consistant à:
- faire passer ledit effluent gazeux à travers un lit de matériau granulaire inorganique inerte servant de support à une biomasse constituée de bactéries majoritairement autotrophes destinées à dégrader lesdites matières polluantes, à une vitesse supérieure ou égale à 400 m/h
- arroser ledit lit avec un liquide d'arrosage,
- récupérer l'effluent gazeux épuré et biodésodorisé à la sortie dudit lit, les éléments nutritifs nécessaires à la biomasse étant apportés en totalité par ledit liquide d'arrosage et/ou par ledit effluent gazeux,
l'ensemble formé par ledit lit de matériau granulaire inorganique inerte et ladite biomasse autotrophe permettant de dégrader concommitamment lesdites matières polluantes par voie physico-chimique et par voie biologique.

2. Procédé selon la revendication 1 caractérisé en ce que lesdits éléments nutritifs sont apportés en totalité par ledit liquide d'arrosage.

3. Procédé selon la revendication 1 caractérisé en ce que lesdits éléments nutritifs sont apportés en totalité par ledit effluent gazeux.

4. Procédé selon l'une des revendications 1 à 3 caractérisé en ce qu'il comprend une étape complémentaire de recirculation d'au moins une partie du liquide d'arrosage à sa sortie dudit lit.

5. Procédé selon la revendication 4 caractérisé en ce que ladite étape de recirculation s'accompagne d'une étape de régulation du pH dudit liquide d'arrosage à pH essentiellement neutre, compris entre 6 et 8, ou alcalin, compris entre 8 à 14.

6. Procédé selon la revendication 5 caractérisé en ce que ladite étape de régulation du pH est effectuée par ajout de potasse dans ledit liquide d'arrosage.

7. Procédé selon la revendication 4 caractérisé en ce que ladite étape de recirculation s'accompagne d'une étape de régulation du pH dudit liquide d'arrosage à pH acide inférieur à 6.

8. Procédé selon l'une des revendications 1 à 3 caractérisé en ce qu'il comprend une étape constituant à évacuer directement ledit liquide d'arrosage sans étape de recirculation.

9. Procédé selon l'une des revendications 1 à 8 caractérisé en ce que ladite étape d'arrosage dudit lit de matériau granulaire inorganique est menée de façon continue.

10. Procédé selon l'une des revendications 1 à 8 caractérisé en ce que ladite étape d'arrosage dudit lit de matériau granulaire inorganique est menée de façon discontinue afin d'alterner des périodes d'arrosage dudit lit et des périodes de non-arrosage dudit lit.

11. Procédé selon la revendication 10 caractérisé en ce que lesdites périodes de non-arrosage dudit lit n'excèdent pas une durée de 24 heures.

12. Procédé selon l'une des revendications 1 à 11 caractérisé en ce que ladite étape consistant à faire passer ledit effluent gazeux à travers ledit matériau granulaire inorganique et ladite étape consistant à arroser ledit lit avec un liquide d'arrosage sont effectuées de façon telle que ledit effluent gazeux connaisse un mouvement ascendant dans ledit lit de matériau granulaire inorganique et que ledit liquide d'arrosage connaisse un mouvement descendant dans ledit lit de matériau granulaire inorganique, à contre-courant dudit effluent gazeux.

13. Procédé selon l'une des revendications 3 à 12 caractérisé en ce que ledit effluent gazeux comprend naturellement plus de 1 mg/m³ d'ammoniac et plus de 1% de C0₂ /m³.

14. Procédé selon l'une des revendications 3 à 12 caractérisé en ce qu'il comprend un étape supplémentaire consistant à doper préalablement ledit effluent gazeux de façon telle que celui-ci comprenne plus de 1 mg/m³ d'ammoniac et plus de 1% de C0₂ /m^{3,} lors de son entrée dans ledit lit de matériau granulaire.

15. Procédé selon l'une des revendications 2 et 4 à 12 caractérisé en ce que ladite étape d'arrosage dudit lit de matériau granulaire inorganique est effectuée avec un liquide présentant une teneur minimale en azote ammoniacal supérieure à 1 mg/l.

16. Procédé selon l'une des revendications 2 et 4 à 12 caractérisé en ce que ladite étape d'arrosage dudit lit de matériau granulaire inorganique est effectuée avec un liquide présentant une teneur minimale en carbonates de 10 mg/l.

17. Procédé selon l'une des revendications 2 et 4 à 12 caractérisé en ce que ladite étape d'arrosage dudit lit de matériau granulaire inorganique est effectuée avec un liquide présentant un teneur minimale en phosphates supérieure à 0,01 mg/l.

18. Procédé selon l'une des revendications 1 à 17 caractérisé en ce que ledit matériau granulaire inorganique inerte est un matériau minéral choisi dans le groupe constitué par l'argile, les schistes argileux, les alumines, les alumines activées, les zéolites, les roches volcaniques, les sables, les graviers, l'anthracite et le charbon actif.

19. Procédé selon la revendication 18 caractérisé en ce que ledit matériau granulaire inorganique présentent une granulométrie supérieure à 1mm.

20. Procédé selon l'une des revendications 1 à 19 caractérisé en ce que ladite biomasse comprend des bactéries autotrophes permettant d'oxyder les composés soufrés choisies dans le groupe constitué par Thiobacillus thiooxydans, Thiobacillus thioparus et Thiobacillus intermedius.

21. Procédé selon l'une des revendications 1 à 20 caractérisé en ce qu'il comprend un étape supplémentaire consistant à faire passer ledit effluent gazeux à sa sortie du lit de matériau granulaire inorganique supportant ladite biomasse sur au moins une unité de filtration d'affinage, accolée audit lit ou séparée de celui-ci, en courant ascendant ou en courant descendant.

22. Procédé selon la revendication 21 caractérisé en ce que ladite unité de filtration est constituée par au moins un lit de charbon actif en grains.

23. Procédé selon l'une des revendications 1 à 22 caractérisé en ce que ladite étape consistant à arroser ledit lit de matériau granulaire inorganique est effectuée à l'aide d'une eau choisie dans le groupe constitué par les eaux de forage, naturelles ou complémentées, et les eaux de sortie des stations d'épuration des eaux usées.

24. Installation pour la mise en oeuvre du procédé selon l'une des revendications 1 à 23 comprenant:
- une cuve présentant une chambre supérieure et une chambre inférieure séparées par une grille,
- des moyens d'amenée d'un effluent gazeux prévus au niveau de ladite chambre inférieure,
- un matériau granulaire ensemencé avec une biomasse remplissant au moins une partie de ladite chambre supérieure, et,
- des moyens d'arrosage dudit matériau granulaire présent dans ladite chambre supérieure à l'aide d'un liquide d'arrosage,
caractérisée en ce que ledit matériau granulaire est un matériau granulaire inorganique inerte ensemencé avec une biomasse autotrophe.

25. Installation selon la revendication 24 caractérisée en ce qu'elle comprend des moyens de recirculation dudit liquide d'arrosage.

26. Installation selon la revendication 25 caractérisée en ce qu'elle comprend des moyens de régulation du pH du liquide d'arrosage.

## Claims

1. Process for purifying and biodeodorizing a gaseous effluent charged with organic pollutant matter, H₂S and NH₃, characterized in that it comprises steps consisting of:
- passing the said gaseous effluent through a bed of inert inorganic granular material acting as a support for a biomass consisting of bacteria, the majority of which are autotrophic bacteria, designed to degrade the said pollutant material at a rate greater than or equal to 400 m/h,
- sprinkling the said bed with a sprinkling liquid,
- recovering the purified and biodeodorized gaseous effluent at the outlet from the said bed, the nutrient elements necessary for the biomass being supplied entirely by the said sprinkling liquid and/or by the said gaseous effluent,
the assembly formed by the said bed of inert inorganic granular material and the said autotrophic biomass enabling the said pollutant materials to be degraded concomitantly by physico-chemical and biological means.

2. Process according to claim 1, characterized in that the said nutrient elements are supplied entirely by the said sprinkling liquid.

3. Process according to claim 1, characterized in that the said nutrient elements are supplied entirely by the said gaseous effluent.

4. Process according to one of claims 1 to 3, characterized in that it comprises a complementary step of recirculating at least part of the sprinkling liquid on leaving the said bed.

5. Process according to claim 4, characterized in that the said recirculation step is accompanied by a step to regulate the pH of the said sprinkling liquid to an essentially neutral pH of between 6 and 8 or an alkaline pH of between 8 to 14.

6. Process according to claim 5, characterized in that the said step for regulating the pH is performed by adding potash to the said sprinkling liquid.

7. Process according to claim 4, characterized in that the said recirculation step is accompanied by a step to regulate the pH of the said sprinkling liquid to an acidic pH of less than 6.

8. Process according to one of claims 1 to 3, characterized in that it comprises a step consisting of discharging the said sprinkling liquid directly without a recirculation step.

9. Process according to one of claims 1 to 8, characterized in that the said step of sprinkling the said bed of inorganic granular material is carried out continuously.

10. Process according to one of claims 1 to 8, characterized in that the said step of sprinkling the said bed of inorganic granular material is carried out discontinuously in order to alternate periods during which the said bed is sprinkled with periods during which the said bed is not sprinkled.

11. Process according to claim 10, characterized in that the said periods during which the said bed is not sprinkled do not exceed a period of 24 hours.

12. Process according to one of claims 1 to 11, characterized in that the said step consisting of passing the said gaseous effluent through the said inorganic granular material and the said step consisting of sprinkling the said bed with a sprinkling liquid are carried out in such a way that the said gaseous effluent undergoes a rising motion through the said bed of inorganic granular material and the said sprinkling liquid undergoes a descending motion through the said bed of inorganic granular material, in a counterflow to the said gaseous effluent.

13. Process according to one of claims 3 to 12, characterized in that the said gaseous effluent naturally comprises more than 1 mg/m³ of ammonia and more that 1 % of CO₂/m³.

14. Process according to one of claims 3 to 12, characterized in that it comprises an additional step consisting of the preliminary doping of the said gaseous effluent in such a way that it comprises more than 1 mg/m³ of ammonia and more that 1 % of CO₂/m³ when it enters the said bed of granular material.

15. Process according to one of claims 2 and 4 to 12, characterized in that the said step of sprinkling the said bed of inorganic granular material is carried out with a liquid having a minimum ammoniacal nitrogen content of over 1 mg/l.

16. Process according to one of claims 2 and 4 to 12, characterized in that the said step of sprinkling the said bed of inorganic granular material is carried out with a liquid having a minimum carbonates content of 10 mg/l.

17. Process according to one of claims 2 and 4 to 12, characterized in that the said step for sprinkling the said bed of inorganic granular material is carried out with a liquid having a minimum phosphates content of over 0.01 mg/l.

18. Process according to one of claims 1 to 17, characterized in that the said inert inorganic granular material is a mineral material selected from the group consisting of clay, clay slates, aluminas, activated aluminas, zeolites, volcanic rocks, sand, gravel, anthracite and activated carbon.

19. Process according to claim 18, characterized in that the said inorganic granular material has a particle size greater than 1 mm.

20. Process according to one of claims 1 to 19, characterized in that the said biomass comprises autotrophic bacteria enabling sulphur-containing compounds selected from the group consisting of Thiobacillus thiooxidans, Thiobacillus thioparus and Thiobacillus intermedius, to be oxidized.

21. Process according to one of claims 1 to 20, characterized in that it comprises an additional step consisting of passing the said gaseous effluent, on leaving the bed of inorganic granular material supporting the said biomass, through at least one refining filtration unit attached to the said bed or separate from it, in a rising flow or in a descending flow.

22. Process according to claim 21, characterized in that the said filtration unit consists of at least one bed of granular activated carbon.

23. Process according to one of claims 1 to 22, characterized in that the said step consisting of sprinkling the said bed of inorganic granular material is carried out by means of water selected from the group consisting of water from drillings, either natural or supplemented, and water leaving waste-water purification stations.

24. Installation for putting into practice the process according to one of claims 1 to 23, comprising :
- a vessel having an upper chamber and a lower chamber separated by a screen,
- means for conveying a gaseous effluent provided in the said lower chamber,
- a granular material seeded with a biomass filling at least part of the said upper chamber, and
- means for sprinkling the said granular material present in the said upper chamber by means of a sprinkling liquid, characterized in that the said granular material is an inert inorganic granular material seeded with an autotrophic biomass.

25. Installation according to claim 24, characterized in that it comprises means for recirculating the said sprinkling liquid.

26. Installation according to claim 25, characterized in that it comprises means for regulating the pH of the sprinkling liquid.

## Patentansprüche

1. Verfahren zur Reinigung und zur Biodesodorisierung eines Abgases, das mit verunreinigten organischen Substanzen, H₂S und NH₃, beladen ist, dadurch gekennzeichnet, daß es die folgenden Schritte umfaßt:
- es wird das Abgas mit einer Geschwindigkeit größer oder gleich 400 m/h durch ein Bett aus anorganischem, inertem, granulärem Material geschickt, das als Träger einer aus Bakterien bestehenden Biomasse dient, die überwiegend autotroph sind und zum Abbau des verunreinigten Materials dienen,
- es wird das Bett mit einer Berieselungsflüssigkeit berieselt,
- es wird das gereinigte und biodesodorisierte Abgas am Ausgang des Bettes wiedergewonnen,
wobei die notwendigen Nährstoffe für die Biomasse vollständig von der Berieselungsflüssigkeit und/oder dem Abgas zugeführt werden,
und wobei die vom anorganischen, inerten, granulären Material und der autotrophen Biomasse gebildete Gesamtheit gleichzeitig den Abbau der verunreinigten Substanzen auf physikalisch-chemischem und biologischem Weg erlaubt.

2. Verfahren nach Anspruch 1,
dadurch gekennzeichnet, daß die Nährstoffe vollständig mittels der Berieselungsflüssigkeit zugeführt werden.

3. Verfahren nach Anspruch 1,
dadurch gekennzeichnet, daß die Nährstoffe vollständig mittels des Abgases zugeführt werden.

4. Verfahren nach einem der Ansprüche 1 bis 3,
dadurch gekennzeichnet, daß es einen zusätzlichen Schritt umfaßt, bei dem mindestens ein Teil der Berieselungsflüssigkeit am Ausgang des Bettes rezirkuliert wird.

5. Verfahren nach Anspruch 4,
dadurch gekennzeichnet, daß der Rezirkulationsschritt von einem Schritt zur Regulierung des pH-Wertes der Berieselungsflüssigkeit auf einen im wesentlichen neutralen pH-Wert (zwischen 6 und 8) oder auf einen alkalischen pH-Wert (zwischen 8 bis 14) begleitet ist.

6. Verfahren nach Anspruch 5,
dadurch gekennzeichnet, daß der Schritt zur Regulierung des pH-Wertes durch Zusatz von Kalium zur Berieselungsflüssigkeit durchgeführt wird.

7. Verfahren nach Anspruch 4,
dadurch gekennzeichnet, daß der Rezirkulationsschritt von einem Schritt zur Regulierung des pH-Wertes der Berieselungsflüssigkeit auf einen sauren pH-Wert unterhalb von 6 begleitet ist.

8. Verfahren nach einem der Ansprüche 1 bis 3,
dadurch gekennzeichnet, daß es einen Schritt umfaßt, der aus dem direkten Entfernen der Berieselungsflüssigkeit ohne einen Rezirkulationsschritt besteht.

9. Verfahren nach einem der Ansprüche 1 bis 8,
dadurch gekennzeichnet, daß der Schritt zur Berieselung des Bettes des anorganischen, granulären Materials kontinuierlich durchgeführt wird.

10. Verfahren nach einem der Ansprüche 1 bis 8,
dadurch gekennzeichnet, daß der Schritt zur Berieselung des Bettes des anorganischen, granulären Materials diskontinuierlich durchgeführt wird, um zwischen Perioden der Berieselung des Bettes und Perioden der Nicht-Berieselung des Bettes abzuwechseln.

11. Verfahren nach Anspruch 10,
dadurch gekennzeichnet, daß die Perioden der Nicht-Berieselung des Bettes eine Dauer von 24 Stunden nicht übersteigen.

12. Verfahren nach einem der Ansprüche 1 bis 11,
dadurch gekennzeichnet, daß der Schritt, bei dem das Abgas durch das anorganische, granuläre Material hindurchgeschickt wird, und der Schritt, bei dem das Bett mit einer Berieselungsflüssigkeit berieselt wird, derart ausgeführt werden, daß das Abgas eine aufsteigende Bewegung im Bett des anorganischen, granulären Materials durchführt und das die Berieselungsflüssigkeit eine absteigende Bewegung im Bett des anorganischen, granulären Materials im Gegenstrom zum Abgas durchführt.

13. Verfahren nach einem der Ansprüche 3 bis 12,
dadurch gekennzeichnet, daß das Gas in natürlicher Weise mehr als 1 mg/m³ Ammoniak und mehr als 1% CO₂/m³ enthält.

14. Verfahren nach einem der Ansprüche 3 bis 12,
dadurch gekennzeichnet, daß es einen zusätzlichen Schritt umfaßt, in dem das Abgas vorher derart beimpft wird, daß es mehr als 1 mg/m³ Ammoniak und mehr als 1% CO₂/m³ zur Zeit seines Eintritts in das Bett des granulären Materials enthält.

15. Verfahren nach einem der Ansprüche 2 und 4 bis 12,
dadurch gekennzeichnet, daß der Schritt zur Berieselung des Bettes aus anorganischem, granulärem Material mit einer Flüssigkeit ausgeführt wird, die einen minimalen Stickstoff-Ammoniak-Gehalt von mehr als 1 mg/l aufweist.

16. Verfahren nach einem der Ansprüche 2 und 4 bis 12,
dadurch gekennzeichnet, daß der Schritt zur Berieselung des Bettes aus anorganischem, granulärem Material mit einer Flüssigkeit durchgeführt wird, die einen minimalen Carbonat-Gehalt von 10 mg/l aufweist.

17. Verfahren nach einem der Ansprüche 2 und 4 bis 12,
dadurch gekennzeichnet, daß der Schritt zur Berieselung des Bettes aus anorganischem, granulärem Material mit einer Flüssigkeit ausgeführt wird, die einen minimalen Phosphat-Gehalt von mehr als 0,01 mg/l aufweist.

18. Verfahren nach einem der Ansprüche 1 bis 17,
dadurch gekennzeichnet, daß das anorganische, inerte, granuläre Material ein mineralisches Material ist, das aus der Gruppe ausgewählt ist, die aus Ton, Schieferton, Tonerde, aktivierter Tonerde, Zeoliten, vulkanischem Gestein, Sand, Kies, Anthrazit und Aktivkohle besteht.

19. Verfahren nach Anspruch 18,
dadurch gekennzeichnet, daß das anorganische, granuläre Material eine Korngröße von größer als 1 mm aufweist.

20. Verfahren nach einem der Ansprüche 1 bis 19,
dadurch gekennzeichnet, daß die Biomasse autotrophe Bakterien umfaßt, die schwefelhaltige Verbindungen oxidieren können und aus der Gruppe ausgewählt sind, die aus Thiobacillus thiooxydans, Thiobacillus thioparus und Thiobacillus intermedius besteht.

21. Verfahren nach einem der Ansprüche 1 bis 20,
dadurch gekennzeichnet, daß es einen zusätzlichen Schritt umfaßt, in dem das Abgas am Ausgang des Bettes aus anorganischem, granulären Material zur Unterstützung der Biomasse in einem aufsteigenden oder absteigenden Strom durch mindestens eine Reinigungsfiltriereinheit geschickt wird, die mit dem Bett verbunden oder getrennt von dieser angeordnet ist.

22. Verfahren nach Anspruch 21,
dadurch gekennzeichnet, daß die Filtriereinheit aus mindestens einem Bett aus körniger Aktivkohle gebildet ist.

23. Verfahren nach einem der Ansprüche 1 bis 22,
dadurch gekennzeichnet, daß der Schritt, in dem das Bett aus anorganischem, granulärem Material berieselt wird, mit Hilfe von Wasser ausgeführt wird, das von der Gruppe ausgewählt ist, die aus Wasser von Bohrungen, natürlichem oder ergänztem Wasser, und von Wasser gebildet ist, das vom Ausgang von Abwasserreinigungsstationen stammt.

24. Vorrichtung zur Durchführung des Verfahrens nach einem der Ansprüche 1 bis 23, umfassend:
- einen Behälter mit einer oberen und einer unteren Kammer, die durch ein Gitter getrennt sind,
- Mittel zum Zuführen eines Abgases, die auf Höhe der unteren Kammer vorgesehen sind,
- ein mit einer Biomasse beimpftes granuläres Material, das mindestens einen Teil der oberen Kammer füllt, und
- Berieselungsmittel für das granuläre Material in der oberen Kammer mit Hilfe einer Berieselungsflüssigkeit,
dadurch gekennzeichnet, daß das granuläre Material ein anorganisches, inertes, granuläres Material ist, das mit einer autotrophen Biomasse beimpft ist.

25. Vorrichtung nach Anspruch 24,
dadurch gekennzeichnet, daß sie Mittel zur Rezirkulation der Berieselungsflüssigkeit umfaßt.

26. Vorrichtung nach Anspruch 25,
dadurch gekennzeichnet, daß sie Mittel zur Regulierung des pH-Wertes der Berieselungsflüssigkeit umfaßt.
